(19) Europäisches Patentamt

European Patent Office

Office européen des brevets

(11) **EP 0 967 576 A1**

(12) # DEMANDE DE BREVET EUROPEEN

(43) Date de publication:
**29.12.1999 Bulletin 1999/52**

(51) Int Cl.⁶: **G06T 9/00**

(21) Numéro de dépôt: **99401457.9**

(22) Date de dépôt: **14.06.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **23.06.1998 FR 9807932**

(71) Demandeur: **STMicroelectronics S.A.**
**94250 Gentilly (FR)**

(72) Inventeur: **Bramley, Richard**
**38100 Grenoble (FR)**

(74) Mandataire: **Casalonga, Axel**
**BUREAU D.A. CASALONGA - JOSSE**
**Morassistrasse 8**
**80469 München (DE)**

(54) **Adressage de mémoire d'un décodeur MPEG**

(57) Lors de la lecture d'un macrobloc prédicteur, on ouvre simultanément à chaque accès à la mémoire deux pages (PA1, PB1) respectivement situées dans les deux bancs-mémoire (BMA, BMB) de la mémoire SDRAM (MMP). Ces deux pages contiennent deux macroblocs (MB1, MB$_{k+1}$) appartenant à deux rangées consécutives de macroblocs de l'image précédemment décodée et à une même colonne de cette image précédemment décodée. On lit les pixels du macrobloc prédicteur par colonnes. On limite ainsi le nombre d'accès-mémoire à chaque lecture d'un macrobloc prédicteur.

## FIG.4

EP 0 967 576 A1

## Description

L'invention concerne le décodage d'images comprimées notamment selon une norme MPEG, et plus particulièrement l'échange de données entre un circuit de décodage des images et une mémoire dynamique.

Selon diverses normes de compression d'images, notamment MPEG ("Motion Pictures Experts Group"), les images sont décodées par carrés, ou macroblocs, généralement de 16 x 16 pixels. Les macroblocs peuvent être de divers formats. Le format le plus couramment utilisé est celui dit 4 : 2 : 0 selon lequel chaque macrobloc contient quatre blocs de 8 x 8 pixels de luminance de huit bits et deux blocs de 8 x 8 pixels de chrominance de huit bits.

Les images traitées sont essentiellement de trois types, à savoir un type dit "intra", un type dit "prédit" et un type dit "bidirectionnel". L'homme du métier sait que les macroblocs d'une image "intra" ne subissent pas de compensation de mouvement. Dans une image prédite, chaque macrobloc peut subir une compensation de mouvement qui consiste à combiner le macrobloc avec un autre macrobloc, dit "prédicteur", cherché dans une image précédemment décodée. Chaque macrobloc d'une image bidirectionnelle peut subir une compensation de mouvement qui consiste à combiner le macrobloc avec deux autres macroblocs prédicteurs, cherchés respectivement dans deux images précédemment décodées. Les positions des macroblocs prédicteurs sont déterminées par des vecteurs de mouvement.

Un système de décodage MPEG, plus simplement appelé dans la suite "décodeur MPEG", doit dialoguer avec une mémoire dynamique pour procéder notamment au décodage des images et en particulier celles nécessitant pour leur décodage le contenu d'au moins une image précédemment décodée et stockée dans cette mémoire. Une telle mémoire joue un rôle essentiel dans le décodage de ces images. Or, avec les technologies actuelles de réalisation, on réalise, au sein d'une même puce, un décodeur MPEG, des moyens de traitement comportant un microprocesseur et destinés notamment à effectuer des opérations de recherche de canal lorsque l'ensemble est intégré dans un décodeur satellite par exemple, ainsi qu'un circuit de génération d'éléments graphiques devant être incrustés dans des images et correspondant par exemple à des menus interactifs appelés au moyen d'une télécommande et permettant à l'utilisateur d'effectuer des réglages de certains paramètres de fonctionnement de son téléviseur ou de son organe de réception.

Or, tous ces éléments se partagent la même mémoire dynamique. Il est donc particulièrement important de pouvoir réduire notamment la bande passante-mémoire utilisée, c'est-à-dire le nombre de cycles d'horloge pendant lequel cette mémoire est accédée par l'un des éléments pour effectuer une phase particulière de traitement, et ce afin de pouvoir laisser du temps disponible pour que les autres éléments puissent accéder à cette mémoire avant que le premier élément ne recommence une autre phase de traitement.

L'invention vise à atteindre ce but au niveau du décodeur MPEG. En d'autres termes, l'invention vise à minimiser les périodes temporelles pendant lesquelles la mémoire est accédée par le décodeur MPEG, en particulier lors du décodage des images.

L'invention propose donc un procédé de décodage par macrobloc d'une image incidente codée par des données comprimées, cette image étant du type de celle nécessitant pour son décodage le contenu d'au moins une image précédemment décodée et stockée dans une mémoire. Selon une caractéristique générale de l'invention, la mémoire est une mémoire dynamique synchrone à accès aléatoire comportant deux bancs-mémoire organisés par pages (mémoire SDRAM). On effectue des accès-page (accès-mémoire) à la mémoire ouvrant simultanément deux pages respectivement situées dans les deux bancs-mémoire de façon à stocker respectivement dans les deux pages ouvertes, deux macroblocs appartenant respectivement à deux rangées consécutives de macroblocs de l'image précédemment décodée et à une même colonne de macroblocs de l'image précédemment décodée. Le décodage de chaque macrobloc de l'image incidente comprend alors l'extraction hors de la mémoire d'un macrobloc prédicteur d'une taille supérieure ou égale à celle des macroblocs de l'image stockée en mémoire. Cette extraction comporte des accès-page à ladite mémoire de façon à ouvrir simultanément à chaque accès-page, deux pages respectivement situées dans les deux bancs-mémoire et contenant respectivement deux macroblocs appartenant respectivement à deux rangées consécutives de macroblocs et à une même colonne de macroblocs de l'image stockée. On procède ensuite à une lecture colonne par colonne d'une partie des pixels des deux macroblocs accédés lors dudit accès-page, de façon à obtenir une partie des pixels correspondants du macrobloc prédicteur.

L'invention permet ainsi de réduire le nombre d'accès-page à la mémoire, et par conséquent le nombre de cycles d'horloge nécessaires à l'ouverture de ces pages. L'invention permet par conséquent une réduction notable de la bande passante-mémoire utilisée.

Bien que l'invention s'applique au décodage de toute image de type de celle nécessitant pour son décodage le contenu d'au moins une image précédemment décodée, par exemple une image prédite, l'invention s'applique particulièrement avantageusement au décodage d'une image de type bidirectionnel nécessitant pour son décodage le contenu de deux images précédemment décodées et stockées dans ladite mémoire, lorsque ces images bidirectionnelles sont décodées au vol. En effet, le décodage au vol de ces images bidirectionnelles (décodage "on the fly") s'effectue en fait par deux décodages successifs de l'image sans stockage de l'image reconstruite dans la mémoire d'images. Plus précisément, on décode chaque image bidirectionnelle une première fois pendant qu'une première trame de l'image est directement affichée, et une deuxième fois pendant qu'une deuxième trame de l'image est directement affichée, les deux trames correspondant à des lignes de parités différentes de ladite image.

Le décodage au vol des images bidirectionnelles permet de réduire la taille de la mémoire SDRAM utilisée, et la diminution du nombre d'accès-page à la mémoire SDRAM, revêt ici un avantage certain en raison des deux décodages successifs de l'image bidirectionnelle.

L'invention a également pour objet un dispositif de traitement d'images incidentes, codées par des données comprimées, ce dispositif comportant des moyens de décodage aptes à décoder macrobloc par macrobloc chaque image courante incidente, une mémoire reliée aux moyens de décodage et apte à stocker certaines au moins des images décodées, et des moyens de contrôle reliés aux moyens de décodage et à la mémoire. Selon une caractéristique générale de l'invention, la mémoire est une mémoire dynamique synchrone à accès aléatoire comportant deux bancs-mémoire organisés par pages. Les moyens de contrôle sont aptes à effectuer des accès-page à la mémoire ouvrant simultanément deux pages respectivement situées dans les deux bancs-mémoire de façon à stocker respectivement dans les deux pages ouvertes, deux macroblocs appartenant respectivement à deux rangées consécutives de macroblocs et à une même colonne de macroblocs de l'image précédemment décodée. Les moyens de contrôle sont aptes à extraire hors de la mémoire, pour le décodage de chaque macrobloc de l'image incidente, un macrobloc prédicteur d'une taille supérieure ou égale à celle des macroblocs de l'image stockée en mémoire, cette extraction comportant des accès-page à la mémoire de façon à ouvrir simultanément à chaque accès-page, deux pages respectivement situées dans les deux bancs-mémoire et contenant respectivement deux macroblocs appartenant respectivement à deux rangées consécutives de macroblocs de l'image stockée et à une même colonne de macroblocs de cette image stockée. La mémoire délivre alors par colonne une partie des pixels des deux macroblocs accédés lors dudit accès-page, de façon à obtenir une partie des pixels correspondants du macrobloc prédicteur.

D'autres avantages et caractéristiques de l'invention apparaîtront à l'examen de la description détaillée de modes de mise en oeuvre et de réalisation nullement limitatifs, et des dessins annexés sur lesquels :

- la figure 1 est un synoptique très schématique d'un système de traitement d'images incorporant un dispositif de traitement d'images selon l'invention,
- la figure 2 est un synoptique schématique plus détaillé d'un dispositif de traitement selon l'invention.
- la figure 3 est une représentation schématique d'une image déjà décodée,

- la figure 4 illustre schématiquement le stockage des différents macroblocs de l'image décodée de la figure 3 dans une mémoire selon l'invention,
- la figure 5 illustre schématiquement le décodage d'une image courante utilisant un macrobloc prédicteur extrait du contenu de l'image précédemment décodée,
- la figure 6 est un synoptique schématique d'une variante de réalisation d'un dispositif de traitement selon l'invention,
- la figure 7 illustre le décodage au vol et l'affichage d'une image bidirectionnelle,
- les figures 8 et 9 illustrent plus en détail le double décodage d'une image bidirectionnelle, et
- la figure 10 est un synoptique schématique plus détaillé d'un convertisseur bloc/ligne selon l'invention utilisable en particulier lors d'un décodage au vol des images bidirectionnelles.

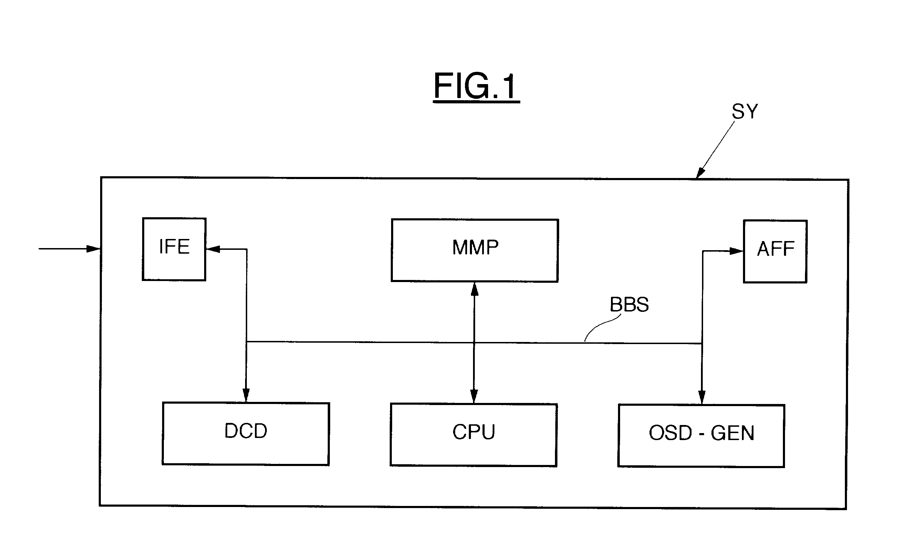

Sur la figure 1, la référence SY désigne d'une façon générale un système de traitement d'images numériques incorporant par exemple un décodeur satellite et/ou un téléviseur.

Dans ce système SY, des moyens d'entrée IFE reçoivent, par exemple, d'une antenne satellite ou d'un disque numérique (non représentés ici à des fins de simplification), un flot de données comprimées selon, par exemple, les normes MPEG.

Un dispositif DCD de traitement d'images selon l'invention, ou décodeur MPEG, décode les images codées à partir de ces données comprimées aux fins de leur affichage sur un écran d'affichage AFF.

Le système SY comprend par ailleurs un microprocesseur CPU pouvant par exemple gérer le décodage des différents canaux satellite, ainsi qu'un générateur OSD-GEN d'informations graphiques, destinées à être incrustées sur l'écran en superposition des images vidéo, par exemple des menus interactifs obtenus par l'actionnement d'une télécommande de téléviseur.

Enfin, un élément essentiel de ce système SY est une mémoire dynamique MMP qui est partagée entre ces différents éléments. Il est donc essentiel de réduire la bande passante-mémoire utilisée afin de permettre aux différents éléments du système SY d'y accéder le plus souvent possible. C'est l'un des buts de l'invention.

L'ensemble des éléments de la figure 1 dialoguent via un bus bidirectionnel BBS.

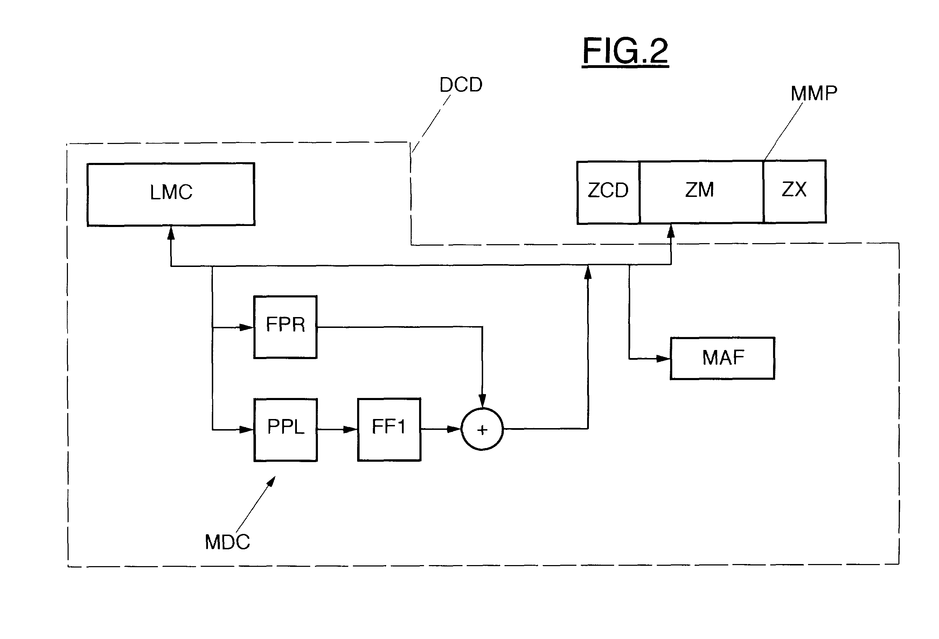

Sur la figure 2, le décodeur DCD comporte essentiellement des moyens dits "de décodage", référencés MDC, et des moyens dits de "gestion d'affichage" et référencés MAF.

Les moyens de décodage MDC comportent essentiellement un circuit dit "pipeline" PPL qui reçoit les données comprimées par un bus de 64 bits et fournit les blocs de luminance et de chrominance des macroblocs traités, à un additionneur par l'intermédiaire d'une mémoire du type "premier entré - premier sorti" (FIFO) référencée FF1. Par ailleurs, l'additionneur reçoit des blocs correspondants de macroblocs prédicteurs filtrés délivrés par un circuit de prédiction FPR à partir de macroblocs prédicteurs extraits de la mémoire MMP.

Le circuit pipeline PPL effectue de façon classique généralement un décodage à longueur variable (VLD), un décodage de chaîne de zéros (RLD), une conversion de balayage zigzag en balayage linéaire et une transformée cosinus discrète inverse ($DCT^{-1}$). Selon les normes MPEG, le circuit de prédiction FPR comprend essentiellement un filtre dit "demi-pixel" destiné, si un vecteur de mouvement permettant de chercher un macrobloc prédicteur n'est pas entier, de décaler ce macrobloc prédicteur d'un demi-pixel verticalement et/ou horizontalement. Les moyens de décodage MDC dialoguent par l'intermédiaire du bus avec la mémoire principale MMP et les échanges entre cette mémoire et les différents éléments du décodeur DCD sont gérés par des moyens de contrôle principaux LMC.

Les normes MPEG préconisent que la mémoire MMP comporte une zone de données comprimées ZCD d'au moins 2,6 Mégabits dans laquelle sont écrites les données comprimées en attente de traitement, ainsi qu'une zone ZX servant à stocker des informations à afficher en surimpression sur l'image et des données de son, la capacité de cette zone ZX s'étend d'environ 1 Mégabit.

Outre ces zones, la mémoire MMP comporte une zone ZM destinée à stocker deux images précédemment décodées et, dans le cas où les images bidirectionnelles ne sont pas décodées au vol, une image en cours de reconstruction.

D'une façon générale, la mémoire MMP selon l'invention est une mémoire dynamique synchrone à accès aléatoire (SDRAM) comportant deux bancs-mémoire organisés en pages. A titre d'exemple, la mémoire MMP peut être une mémoire SDRAM de 64 Mégabits, cadencée à 100 MHz.

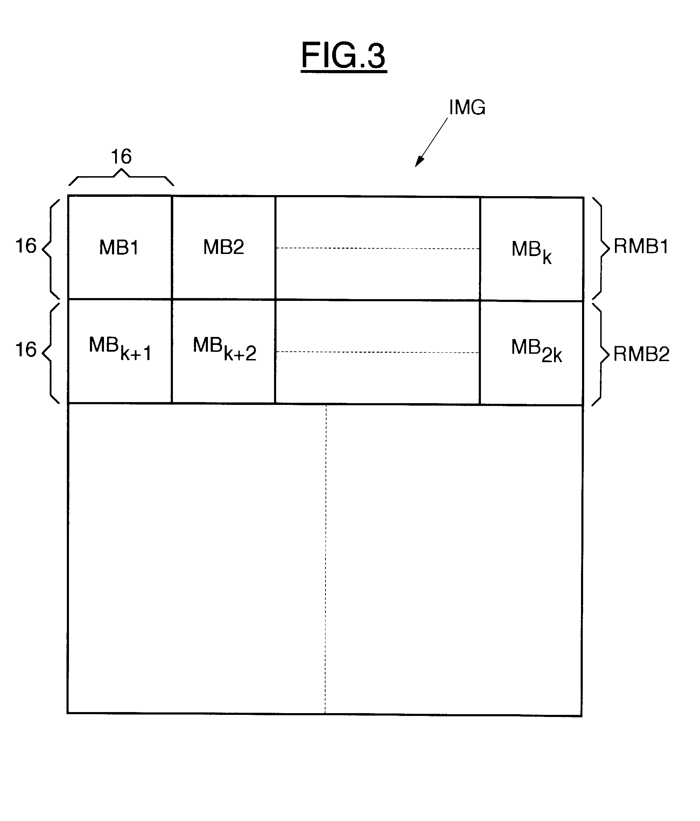

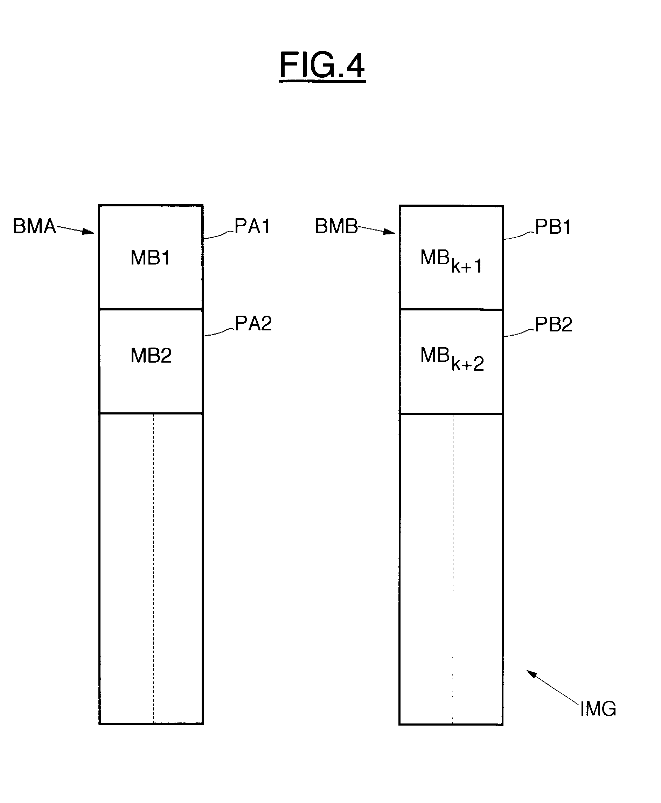

Si l'on se réfère plus particulièrement à la figure 3, on voit qu'une image décodée IMG comporte plusieurs rangées RMB1, RMB2... de macroblocs MB1 - $MB_k$, $MB_{k+1}$ - $MB_{2k}$. De taille 16 x 16 pixels, les macroblocs sont intégralement stockés respectivement dans des pages-mémoire de la mémoire MMP. Ceci étant, dans le but de limiter le nombre d'ouvertures de pages lors des accès aux macroblocs prédicteurs, le stockage des macroblocs d'une image décodée s'effectue d'une façon particulièrement avantageuse, comme illustré sur la figure 4.

Plus précisément, d'une façon générale, deux rangées consécutives de macroblocs de l'image décodée sont respectivement stockées dans les deux bancs-mémoire BMA et BMB de la mémoire MMP. Par ailleurs, deux macroblocs appartenant respectivement, non seulement à deux rangées consécutives de macroblocs de l'image décodée, mais également à une même colonne de macroblocs de cette image, sont stockés dans les deux pages respectivement situées dans les deux bancs-mémoire et ouvertes simultanément lors d'un accès-page. Ainsi, sur la figure 4, où l'on a supposé, à des fins de simplification, qu'une page-mémoire ne contient qu'un seul macrobloc, le macrobloc MB1 de la première rangée est stocké dans la page PA1 du banc-mémoire BMA tandis que le macrobloc $MB_{k+1}$, appartenant à la même colonne que la macrobloc MB1, est stocké dans la page PB1 du deuxième banc-mémoire BMB.

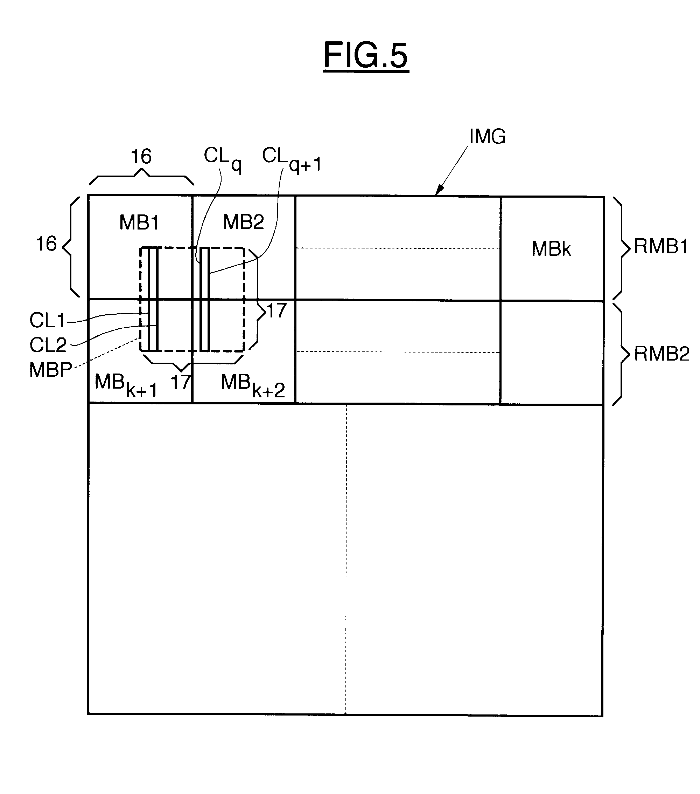

On fait maintenant référence plus particulièrement à la figure 5 pour décrire l'extraction et la lecture d'un macrobloc prédicteur MBP nécessaire au décodage d'une image courante, par exemple du type prédit ou bidirectionnel.

Un macrobloc prédicteur complet comporte une matrice de luminance de 17 x 17 pixels de huit bits et une matrice de chrominance de 9 x 18 pixels de huit bits. En d'autres termes, les matrices de luminance et de chrominance d'un macrobloc prédicteur comportent respectivement une colonne et une rangée de pixels de plus et une colonne et deux rangées de pixels de plus que les matrices correspondantes d'un macrobloc normal, ceci pour les besoins du filtrage demi-pixel dans le circuit de prédiction FPR.

En outre, le premier pixel d'un macrobloc prédicteur peut coïncider avec un pixel quelconque d'un macrobloc de l'image précédemment décodée IMG. En d'autres termes, les macroblocs prédicteurs ne sont pas alignés avec les frontières des pages et chevauchent plusieurs pages-mémoire. Ceci peut se réaliser aussi bien lorsque le macrobloc prédicteur est de taille supérieure à celle des macroblocs de l'image (normes MPEG) ou bien de taille égale à celle des macroblocs de l'image (autres normes de compression).

Par ailleurs, les pixels de chaque macrobloc prédicteur sont lus colonne par colonne, par exemple par paires de colonnes.

L'utilisation d'une mémoire synchrone à deux bancs-mémoire, en combinaison avec le stockage particulier des macroblocs de l'image décodée ainsi qu'avec la lecture par colonnes des pixels, permet de limiter le nombre d'ouvertures de pages lors de la lecture de chaque macrobloc prédicteur, et ce quelle que soit sa taille.

En effet, si l'on suppose par exemple que le premier macrobloc d'une image en cours de décodage nécessite la lecture du macrobloc MBP de l'image IMG précédemment décodée (figure 5) et chevauchant les quatre macroblocs MB1, MB2, $MB_{k+1}$ et $MB_{k+2}$ de cette image précédemment décodée, la lecture des colonnes du macrobloc prédicteur (par exemple les colonnes CL1 et CL2) situées dans le macrobloc MB1 et $MB_{k+1}$ ne nécessite qu'un seul accès-page à la mémoire MMP puisque les deux pages PA1 et PB1 stockant respectivement ces deux macroblocs MB1 et $MB_{k+1}$ sont simultanément ouvertes lors de l'accès-page. Lorsque toutes les colonnes du macrobloc prédicteur MBP s'étendant sur les macroblocs MB1 et $MB_{k+1}$ ont été lues, on effectue un deuxième accès- page à la mémoire de façon à ouvrir simultanément les pages PA2 et PB2 stockant respectivement les macroblocs MB2 et $MB_{k+2}$. On procède ensuite à la lecture, par colonne, des pixels des colonnes (par exemple $CL_q$ et $CL_{q+1}$) s'étendant sur ces deux macroblocs MB2 et $MB_{k+2}$.

L'homme du métier remarque donc que l'invention permet de réduire notablement le nombre d'ouvertures de pages pour la lecture des macroblocs prédicteurs. Il en résulte donc une diminution notable des cycles d'horloge nécessaires pour ces ouvertures de pages.

Dans une variante de l'invention dans laquelle les images bidirectionnelles ne sont pas décodées au vol mais stockées également dans la mémoire MMP, les moyens de gestion d'affichage MAF peuvent comprendre simplement, de façon classique, un contrôleur vidéo assurant la gestion de l'écran d'affichage AFF et recevant les pixels de l'image à afficher, ligne par ligne, directement de la mémoire MMP.

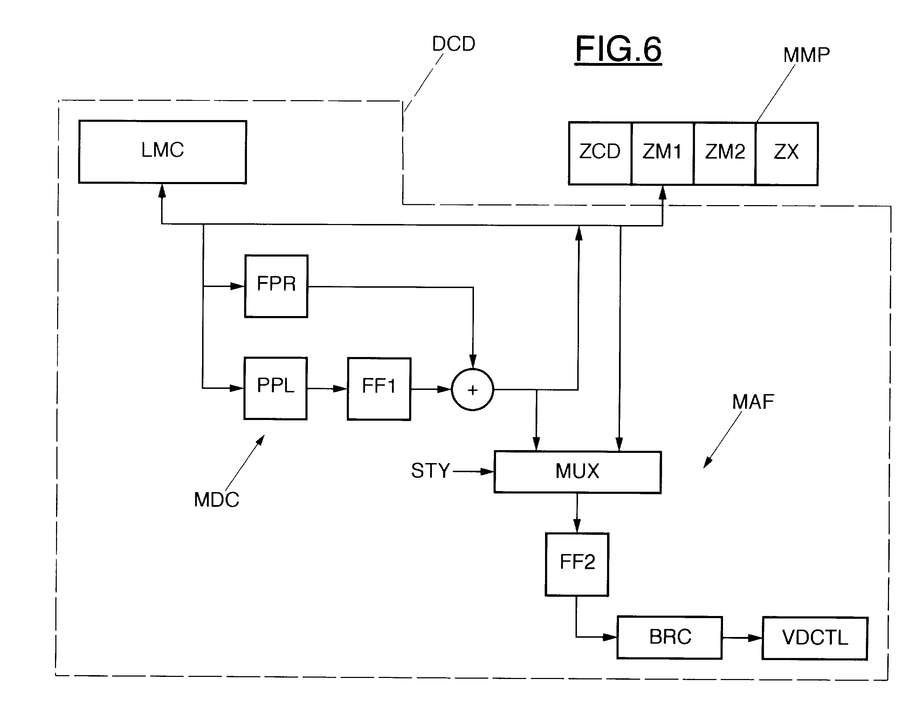

Ceci étant, le mode de réalisation qui va maintenant être décrit en référence aux figures 6 et suivantes permet de réduire la taille de la mémoire MMP en effectuant un décodage au vol des images bidirectionnelles, et permet également de réduire le nombre d'ouvertures de pages lors de l'affichage des images "intra" et "prédites" stockées dans la mémoire MMP.

Les moyens de gestion d'affichage MAF comprennent ici un multiplexeur MUX dont une première entrée est reliée à la sortie de l'additionneur des moyens de décodage MDC, et dont une deuxième entrée est reliée à la sortie de la mémoire MMP. La sortie du multiplexeur est reliée à une deuxième mémoire tampon du type FIFO, référencé FF2. La sortie de cette mémoire tampon FF2 est reliée à un convertisseur bloc/ligne BRC dont on reviendra plus en détail ci-après sur la structure et la fonction. La sortie du bloc BRC est reliée à un contrôleur vidéo VDCTL assurant la gestion de l'écran d'affichage AFF.

La sortie du multiplexeur MUX est reliée à l'une ou l'autre de ses deux entrées en fonction d'un signal de commande STY représentatif du type d'image affichée, c'est-à-dire en l'espèce soit une image bidirectionnelle, soit une image intra ou prédite.

La zone ZM de la mémoire MMP comporte, dans l'exemple décrit ici et correspondant à un décodage au vol des images bidirectionnelles, uniquement deux zones supplémentaires d'images ZM1 et ZM2. Chacune de ces zones ZM1 et ZM2 doit être capable de stocker une image PAL (la plus grande selon les normes internationales) de 720 x 576 pixels. En utilisant le format 4 : 2 : 0 des macroblocs, les pixels sont les douze bits et la taille totale de l'image est d'environ 4,9 Mégabits.

Dans le mode de réalisation décrit ici, au lieu de stocker une image bidirectionnelle en cours de reconstruction dans une zone mémoire de la mémoire MMP afin de l'afficher plus tard, cette image bidirectionnelle est affichée au vol, c'est-à-dire qu'elle est affichée pendant qu'elle est décodée. Ceci permet de réduire la taille de la mémoire MMP et de ne prévoir que deux zones mémoire ZM1 et ZM2 pour stocker deux images précédemment décodées, du type "intra" ou "prédit".

Si l'on veut afficher au vol une image bidirectionnelle en cours de décodage, il faut afficher d'abord une première trame constituée des lignes impaires de l'image, puis une deuxième trame constituée des lignes paires de l'image alors que le traitement précédant l'affichage est généralement effectué sur l'image globale, c'est-à-dire dans l'ordre des lignes. Ceci entraîne, si les moyens de décodage MDC décodent les lignes au rythme d'affichage de celles-ci, que la $(2K-1)^{ème}$ ligne doit être affiché au moment où les moyens de décodage MDC décodent la $K^{ème}$ ligne. En d'autres termes, au moment où la première trame aurait dû être affichée, le décodeur n'aura pu décoder que la moitié de cette trame.

Aussi est-il prévu de décoder chaque image bidirectionnelle deux fois pendant la durée d'affichage de cette image. Dans ce cas, au moment où l'on doit afficher la $2K-1^{ème}$ ligne, on aura décodé 2K lignes. Plus précisément, au moment où on aura affiché la première trame, on aura décodé l'image complète et donc les deux trames de cette image.

Comme l'affichage s'effectue au vol, la deuxième trame qui était décodée mais non affichée est perdue. Cette deuxième trame est affichée en même temps qu'on décode une deuxième fois l'image

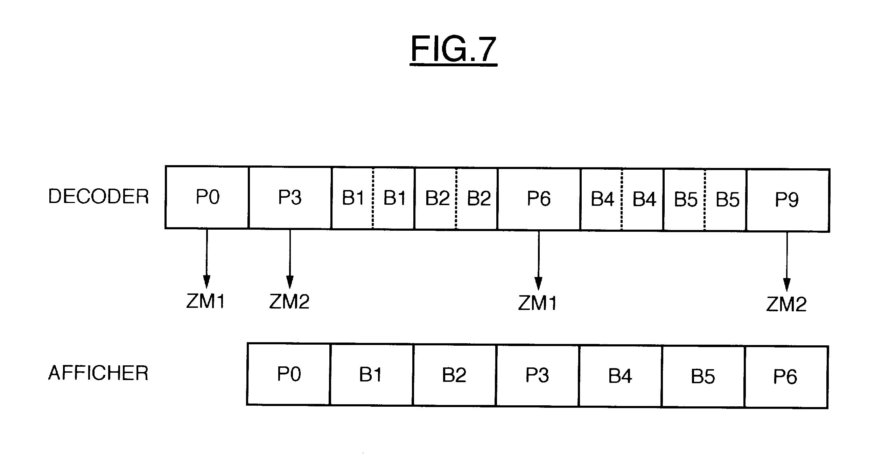

La figure 7 représente un diagramme temporel du décodage et de l'affichage d'un groupe d'images. Les images à afficher successivement sont désignées par P0, B1, B2, P3, B4, B5, P6, où la lettre P indique une image prédite et la lettre B une image bidirectionnelle. Une telle succession d'images est classique selon les normes MPEG.

La reconstruction de chaque image prédite P nécessite des macroblocs prédicteurs cherchés dans l'image prédite (ou "intra" non représentée) qui lui précède. La reconstruction de chaque image bidirectionnelle B nécessite des macroblocs prédicteurs cherchés dans les deux images prédites qui l'encadrent. Ainsi, les données comprimées correspondant aux images arrivent au décodeur DCD dans un ordre différent de celui de l'affichage. Ici, ces données comprimées arrivent selon l'ordre P0, P3, B1, B2, P6, B4, B5.

Initialement, l'image P0 est décodée et stockée en mémoire, par exemple dans la zone ZM1. Pendant que l'image P3 est décodée et stockée dans la zone ZM2, on affiche l'image P0. Ensuite, l'image P1 est décodée une première fois à vitesse double tandis que l'on affiche au vol la première trame de l'image B1, puis on décode une deuxième fois l'image B1 à vitesse double tandis qu'on affiche la deuxième trame de l'image B1. Chaque décodage de l'image B1 par les moyens MDC utilise des macroblocs prédicteurs cherchés dans les images P0 et P3, qui sont stockées dans les zones ZM1 et ZM2. Les mêmes opérations se produisent pour l'image bidirectionnelle B2. Ensuite, l'image P6 est décodée et stockée dans la zone ZM1 à la place de l'image P0 tandis qu'on affiche l'image P3. Les images B4 et B5 sont, comme les images B1 et B2, décodées deux fois à vitesse double tandis qu'on les affiche. Les décodages des images B4 et B5 utilisent des macroblocs prédicteurs pour chercher dans les images P3 et P6 qui sont stockées dans les zones ZM2 et ZM1.

Afin d'effectuer le décodage au vol des images bidirectionnelles, les moyens de contrôle LMC sont reprogrammés pour effectuer deux fois la tache de transfert au circuit pipeline PPL des données comprimées correspondant à chaque image bidirectionnelle et stockées dans la zone ZCD. A cet égard, les moyens de contrôle sont typiquement cadencés à 25,5 MHz, le circuit pipeline étant lui cadencé typiquement à 34 MHz. Des circuits fonctionnant à ces vitesses sont tout à fait réalisables dans la technologie habituelle.

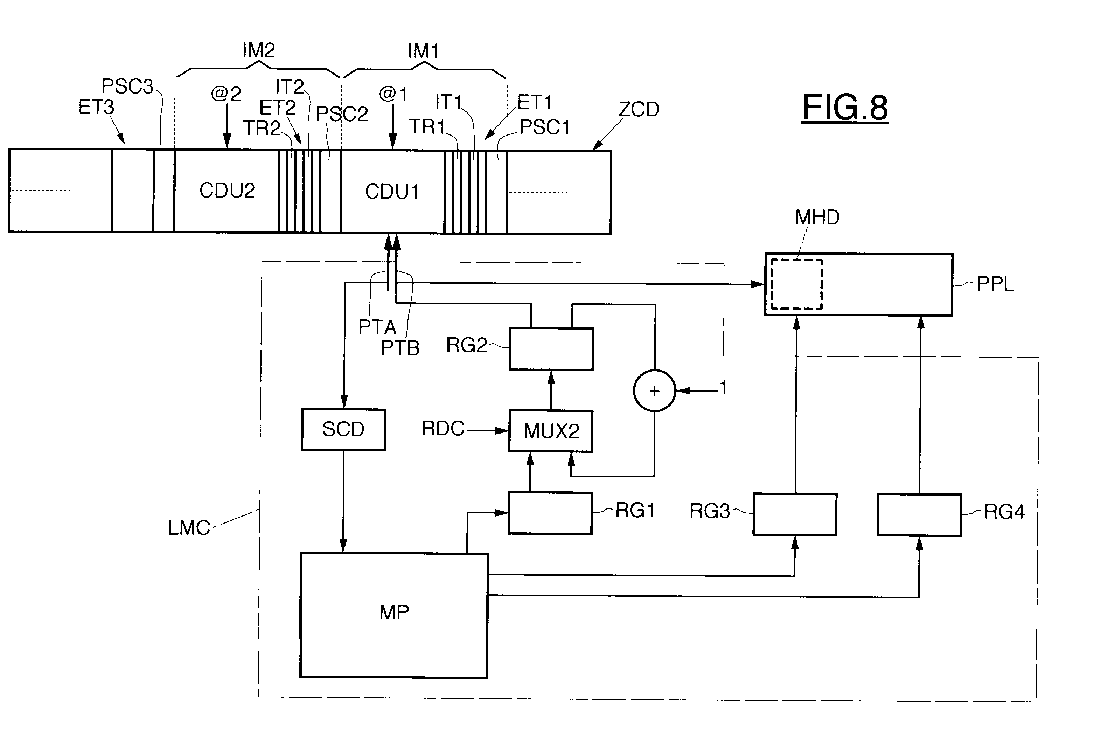

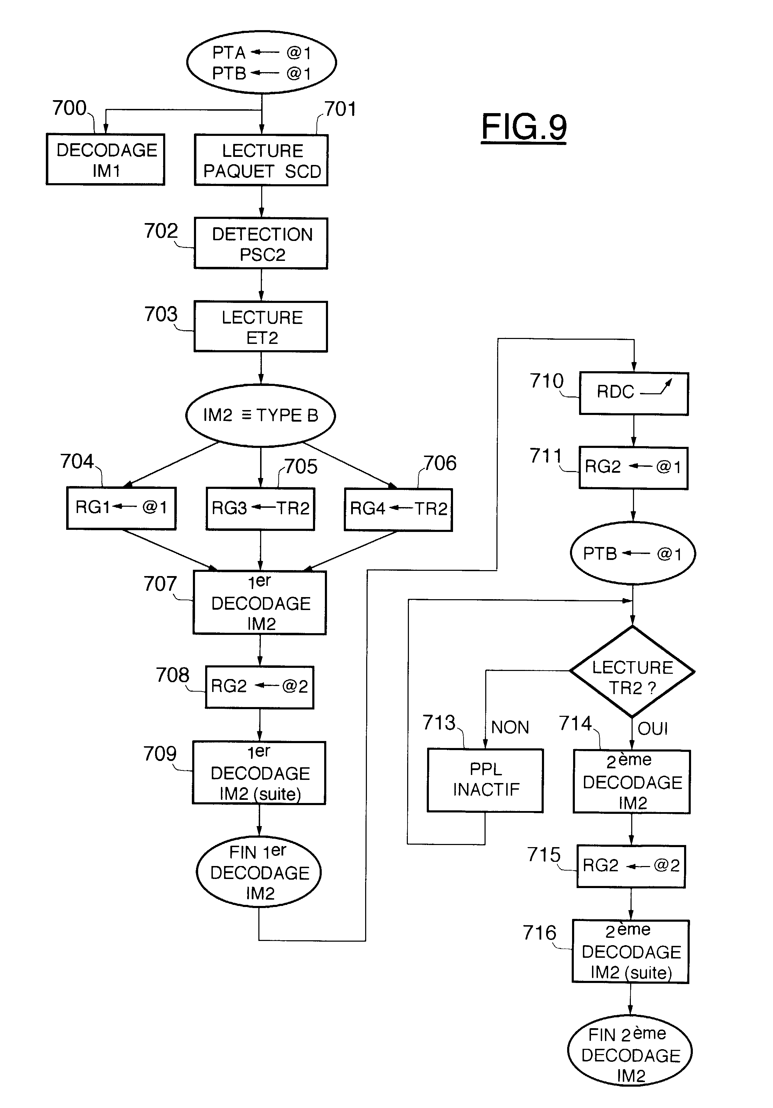

Un mode particulièrement simple de réalisation et de mise en oeuvre permettant aux moyens de contrôle LMC de délivrer deux fois les données comprimées au circuit pipeliné PPL est maintenant décrit en se référant plus particulièrement aux figures 8 et 9.

Classiquement, le flot des données comprimées MPEG, stockées dans la zone mémoire ZCD, comporte des groupes successifs de données comprimées respectivement relatifs à des images incidentes successives IM1, IM2...

Chaque groupe de données associé à une image comporte un identifiant de début d'image PSC (Code de Début d'Image; "Picture Start Code") suivi d'un en-tête ET. Cet en-tête comporte notamment un identifiant spécifique de ladite image, permettant d'identifier de façon bi-univoque ladite image dans la séquence d'images. Cet identifiant spécifique est par exemple ici la référence temporelle TR de l'image ("Temporal Reference" en langue anglaise). L'en-tête comporte également une information IT identifiant le type d'image, par exemple "intra", "prédit" ou "bidirectionnel".

L'en-tête est suivi des données utiles CDU de l'image.

Il est prévu un premier pointeur d'adresse PTA et un deuxième pointeur d'adresse PTB permettant chacun de lire par paquets de bits la zone mémoire aux adresses successives @1, @2...

Les moyens LMC, architecturés autour de moyens de traitement MP, composés essentiellement d'un microprocesseur, comportent un détecteur SCD d'identifiant de début d'image, réalisé par exemple de façon câblé, et apte à détecter dans chaque paquet de bits extrait à l'adresse pointée par le premier pointeur d'adresse PTA, la présence ou l'absence d'un identifiant de début d'image PSC.

Des moyens de gestion de pointeur, aptes à commander la position du deuxième pointeur PTB, sont également reliés aux moyens de traitement MP. Ces moyens de gestion de pointeur comportent schématiquement par exemple un premier registre RG1 dont la sortie est reliée à l'entrée d'un deuxième registre RG2 par l'intermédiaire d'un multiplexeur MUX2 commandé par un signal de commande RDC représentatif de la commande d'un deuxième décodage d'une image. La sortie du registre RG2 est également rebouclée sur son entrée par l'intermédiaire d'un moyen d'incrémentation d'adresse et du multiplexeur MUX2. Le registre RG2 contient donc en fait l'adresse courante du pointeur d'adresse PTB.

Un troisième registre RG3 est apte à stocker la référence temporelle TR d'une image tandis qu'un quatrième registre RG4 est apte à stocker l'information IT représentative du type d'image à décoder de façon à permettre aux différents moyens du circuit pipeline PPL de décoder de façon adéquate l'image courante. En fait, chaque registre RG3 et RG4 est apte à stocker respectivement les informations TR et IT de l'image courante en cours de décodage dans le circuit PPL et également celles de l'image suivante.

Enfin, des moyens d'inhibition de décodage MHD, qui ont été représentés ici à des fins de simplification à l'intérieur du bloc PPL, mais qui pourraient bien entendu se situer à l'extérieur, reçoivent d'une part les bits extraits de la mémoire et contenus dans le paquet pointé par le pointeur PTB, et d'autre part, le contenu du registre RG3. On reviendra plus en détail ci-après sur la fonction de ces moyens MHD qui peuvent être réalisés de façon câblée ou par logiciel.

On va maintenant décrite en se référant plus particulièrement à la figure 9, le fonctionnement de moyens qui viennent d'être décrits en référence à la figure 8.

On suppose que le décodage de l'image IM1 est en cours dans le circuit pipeline PPL (étape 700) et que les deux pointeurs d'adresse PTA et PTB pointent à l'adresse @1.

Le paquet de bits situé à l'adresse @1, extrait de la zone mémoire ZCD, est lu par le détecteur SCD (étape 701).

Celui-ci détecte alors la pésence de l'identifiant de début d'image PSC2 de l'image IM2 (étape 702). Un signal représentatif de cette détection est alors envoyé au microprocesseur MP qui lit la suite des bits du paquet et notamment l'identifiant spécifique ET2 de l'image ainsi que le type IT2 de celle-ci (étape 703). L'image IM2 étant du type bidirectionnel, nécessistant donc un redécodage, le microprocesseur MP stocke dans le registre RG1 (étape 704) l'adresse @1 du paquet contenant l'identifiant PSC2 de début d'image de l'image IM2. Par ailleurs, la référence temporelle TR2 de l'image IM2 est stockée dans le registre REG3 (étape 705) et le type IT2 de cette image est stockée dans le registre REG4 (étape 706).

Le premier décodage de l'image IM2 débute alors dans le circuit pipeline PPL à l'aide des données utiles CDU2 issues du même paquet puisque le deuxième pointeur d'adresse PTB est également à l'adresse @1.

Le registre RG2 est ensuite incrémenté de façon à contenir l'adresse @2, ce qui a pour conséquence de faire pointer le pointeur d'adresse PTB sur cette nouvelle adresse @2 (étape 708). Le pointeur d'adresse PTA est également incrémenté par ailleurs et pointe également sur l'adresse @2.

Le premier décodage de l'image bidirectionnelle IM2 se poursuit avec le reste des données CDU2 (étape 709).

A la fin de ce premier décodage, le circuit VLD contenu dans les moyens PPL délivre un signal de fin de décodage ce qui a pour effet, sous l'action du signal de commande RDC émis par le microprocesseur MP (étape 710), de positionner le multiplexeur MUX2 sur sa première entrée forçant alors le contenu du registre RG2 à l'adresse @1 (étape 711).

En conséquence, le deuxième pointeur d'adresse PTB revient en arrière de façon à repointer sur l'adresse @1. Une difficulté réside ici dans le fait que dans un flot de données MPEG, les intervalles entre les différents identifiants de début d'image PSC des différentes images ne sont pas constants et dépendent du contenu des images. Par conséquent, cette difficulté, en combinaison avec la lecture par paquets de la zone mémoire ZCD, ne permet pas de connaître avec précision l'endroit où se situe le début de l'image IM2 dans le paquet.

L'invention résoud cette difficulté en utilisant, en combinaison avec le retour en arrière du pointeur PTB à l'adresse du paquet contenant l'identifiant de début d'image PSC2 de l'image à redécoder, la référence temporelle TR2 de l'image à redécoder.

Plus précisément, les moyens d'inhibition de décodage MHD vont alors tester séquentiellement les différents bits du paquet lus à l'adresse @1 et comparer ces informations avec l'identifiant spécifique (référence temporelle) TR2 de l'image IM2, stockée dans le registre RG3.

Et, tant que cette comparaison n'est pas positive, c'est-à-dire tant que l'on n'a pas à nouveau détecté la présence de cette référence temporelle TR2, les données fournies par le paquet ne sont pas prises en compte par le circuit pipeline PPL ce qui rend en fait ce dernier inactif (étape 713).

C'est seulement lorsque le résultat de comparaison est positif, c'est-à-dire lorsqu'on a à nouveau détecté la présence de la référence temporelle TR2 que les moyens MHD autorisent la prise en compte par le circuit PPL des données comprimées, permettant le deuxième décodage de l'image bidirectionnelle (étape 714). Au cours de ce deuxième décodage, le registre RG2 est à nouveau incrémenté de façon à déplacer le pointeur PTB à l'adresse @2 (étape 715) de façon à poursuivre le deuxième décodage de l'image IM2 (étape 716) jusqu'à sa fin.

Si l'on revient maintenant au fonctionnement général du décodeur DCD, les images "intra" et "prédites" sont, par un mécanisme classique de requêtes, envoyées vers la mémoire MMP à la sortie de l'additionneur tandis que chaque image bidirectionnelle B décodée est transmise macrobloc par macrobloc vers la mémoire tampon FF2 par l'intermédiaire du multiplexeur commandé par le signal STY émis par les moyens de contrôle LMC. Lorsqu'une image "intra" ou "prédite" stockée dans la mémoire MMP doit être affichée, le multiplexeur MUX est alors commandé sur sa deuxième entrée par le signal STY de façon à stocker les macroblocs de l'image, successivement extraits de la mémoire MMP, dans la mémoire tampon FF2.

Les images délivrées en sortie du multiplexeur MUX sont stockées séquentiellement dans la mémoire tampon FF2, macrobloc par macrobloc. Par contre, le contrôleur vidéo VDCTL nécessite une réception des pixels de l'image ligne par ligne. C'est la raison pour laquelle un convertisseur bloc/ligne BRC est intercalé entre la mémoire tampon FF2 et le contrôleur vidéo VDCTL.

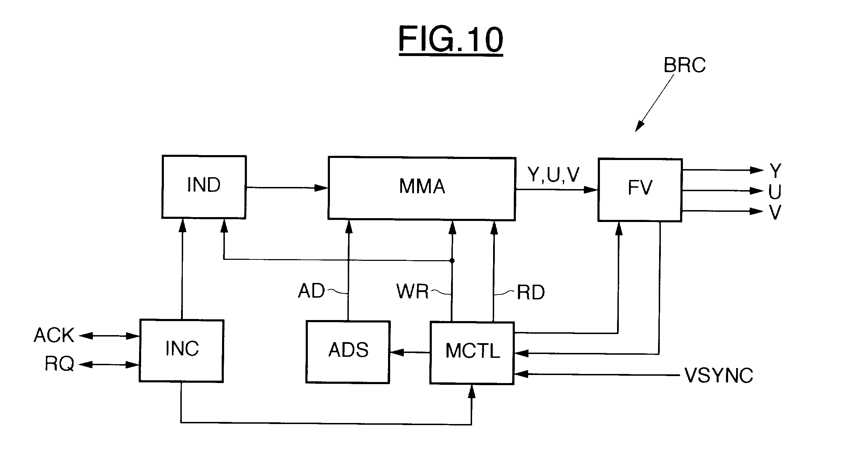

Comme illustré plus précisément sur la figure 10, ce convertisseur BRC comporte une interface d'entreée INB recevant les différents blocs de luminance et de chrominance de chaque macrobloc stocké dans la mémoire tampon FF2. Ces moyens INB sont contrôlés par un contrôleur d'entrée INC au moyen de signaux de requête RQ et d'acquittement ACK. Les données sont ensuite successivement écrites dans une mémoire auxiliaire MMA dont les adresses $A_{i,j}$ sont successivement déterminées par un séquenceur d'adresses ADS. Les différentes valeurs de luminance Y et de chrominance U et V sont extraites ligne par ligne de la mémoire MMA et délivrées à un circuit de filtrage FV qui, lorsqu'il est activé, permet d'effectuer un filtrage vertical sur ces lignes, c'est-à-dire par exemple une moyenne pondérée entre les différentes valeurs des pixels de ces lignes de façon à délivrer des valeurs filtrées de luminance et de chrominance. Le convertisseur BRC est contrôlé d'une façon générale par un contrôleur général MCTL recevant notamment un signal de synchronisation de trame VSYNC fourni par le contrôleur vidéo VDCTL. Ce signal VSYNC permet d'effectuer une sélection de parité. En effet, à chaque décodage, on n'affiche qu'une trame c'est-à-dire seulement les lignes paires ou seulement les lignes impaires. Ainsi, le convertisseur BRC trie parmi les lignes des blocs qu'il reçoit de la mémoire tampon FF2 celles dont la parité correspondant à celle de la trame à afficher. C'est la raison pour laquelle on parle d'un stockage dans la mémoire auxiliaire MMA, demi-macrobloc par demi-macrobloc (chaque demi-macrobloc correspondant à huit lignes). Ainsi, la capacité de ce convertisseur BRC est de huit lignes bien que les macroblocs correspondent à seize lignes. En d'autres termes, la mémoire MMA est capable de stocker au moins une rangée de demi-macroblocs (par exemple une rangée de 45 demi-macroblocs) correspondant à un nombre prédéterminé de lignes de la trame à afficher (en l'espèce huit).

La mémoire MMA est une mémoire dynamique que l'on peut considérer comme une FIFO de grande taille, à l'exception du fait que les accès ne sont pas consécutifs puisque cette mémoire est lue par lignes et écrite par blocs (demi-macroblocs). En fait, les moyens de contrôle MCTL et le séquenceur d'adresses sont programmés de façon à permettre l'écriture séquentielle des données d'un demi-macrobloc dès qu'une place suffisante dans la mémoire a été libérée par le processus d'affichage.

Plus précisément, le séquenceur d'adresses élabore l'adresse courante $A_{i,j}$ de la mémoire auxiliaire à laquelle est lue une donnée courante destinée à l'affichage avant d'être remplacée par une donnée courante d'un demi-macrobloc par la loi suivante :

$$A_{i+1,j} = (A_{i,j} + x_j) \text{ modulo (MN-1)}$$

$$x_{j+1} = N.x_j \text{ modulo (MN-1)}.$$

Dans cette loi, $x_1=1$, M désigne le nombre de lignes de la mémoire auxiliaire, N le nombre de données par ligne, et n le nombre total de lignes de chaque trame. Par ailleurs, $0 < i < MN-1$ et $1 < j < n$.

Le fait d'utiliser cette mémoire auxiliaire du convertisseur BRC permet de limiter le nombre d'ouvertures de pages pour l'affichage des images "intra" et "prédites" stockées dans la mémoire principale MMP. En effet, un nombre donné nd d'ouvertures de pages permet de stocker 8 lignes de chaque trame de l'image à afficher, alors que si les pixels étaient extraits directement ligne par ligne de la mémoire MMP, il aurait fallu nd ouvertures de pages par ligne.

**Revendications**

1.    Procédé de décodage par macrobloc d'une image incidente codée par des données comprimées, du type de celle nécessitant pour son décodage le contenu d'au moins une image précédemment décodée et stockée dans une mémoire, caractérisé par le fait que la mémoire (MMP) est une mémoire dynamique synchrone à accès aléatoire comportant deux bancs-mémoire (BMA, BMB) organisés par pages, par le fait qu'on effectue des accès-page à la mémoire ouvrant simultanément deux pages respectivement situées dans les deux bancs mémoire de façon à stocker respectivement dans les deux pages ouvertes (PA1, PB1) deux macroblocs (MB1, $BM_{k+1}$) appartenant respectivement à deux rangées consécutives de macroblocs (RBM1, RBM2) et à une même colonne de macroblocs de l'image précédemment décodée (IMG), par le fait que le décodage de chaque macrobloc de l'image incidente comprend l'extraction hors de la mémoire, d'un macrobloc prédicteur (MBP) d'une taille supérieure ou égale à celle des macroblocs de l'image stockée en mémoire, cette extraction comportant des accès-page à ladite mémoire de façon à ouvrir simultanément à chaque accès-page, deux pages (PA1, PB1) respectivement situées dans les deux bancs-mémoire et contenant respectivement deux macroblocs (MB1, $BM_{k+1}$) appartenant respectivement à deux rangées consécutives de macroblocs et à une même colonne de macroblocs de l'image stockée, puis une lecture par colonne d'une partie des pixels des deux macroblocs accédés lors dudit accès-page, de façon à obtenir une partie des pixels correspondants du macrobloc prédicteur (MBP).

2.    Procédé selon la revendication 1, pour le décodage d'une image de type bidirectionnel nécessitant pour son décodage le contenu de deux images précédemment décodées et stockées dans ladite mémoire, caractérisé par le fait qu'on décode (PPL) chaque image bidirectionnelle une première fois pendant qu'une première trame de l'image est directement affichée, et une deuxième fois pendant qu'une deuxième trame de l'image est directement affichée, les deux trames correspondant à des lignes de parités différentes de ladite image.

3.    Dispositif de traitement d'images comprimées incidentes, comportant des moyens de décodage (PPL) aptes à décoder macrobloc par macrobloc chaque image courante incidente, une mémoire (MMP) reliée aux moyens de décodage et apte à stocker certaines au moins des images décodées, et des moyens de contrôle (LMC) reliés aux moyens de décodage et à la mémoire, caractérisé par le fait que la mémoire (MMP) est une mémoire dynamique synchrone à accès aléatoire comportant deux bancs-mémoire organisés par pages, par le fait que les moyens de contrôle (LMC) sont aptes à effectuer des accès-page de la mémoire ouvrant simultanément deux pages respectivement situées dans les deux bancs mémoire de façon à stocker respectivement dans les deux pages ouvertes deux macroblocs appartenant respectivement à deux rangées consécutives de macroblocs et à une même colonne de macroblocs de l'image précédemment décodée, par le fait que les moyens de contrôle (LMC) sont aptes à extraire hors de la mémoire, pour le décodage de chaque macrobloc de l'image incidente, un macrobloc prédicteur (MBP) d'une taille supérieure ou égale à celle des macroblocs de l'image stockée en mémoire, cette extraction comportant des accès-page à ladite mémoire de façon à ouvrir simultanément à chaque accès-page, deux pages respectivement situées dans les deux bancs-mémoire et contenant respectivement deux macroblocs appartenant respectivement à deux rangées consécutives de macroblocs et à une même colonne de macroblocs de l'image stockée, la mémoire délivrant alors par colonne une partie des pixels des deux macroblocs accédés lors dudit accès-page, de façon à obtenir une partie des pixels correspondants du macrobloc prédicteur.

4. Dispositif selon la revendication 3, pour le traitement d'une image de type bidirectionnel nécessitant pour son décodage le contenu de deux images précédemment décodées et stockées dans ladite mémoire, caractérisé par le fait que les moyens de décodage (PPL) décodent chaque chaque image bidirectionnelle une première fois pendant qu'une première trame de l'image est directement affichée, et une deuxième fois pendant qu'une deuxième trame de l'image est directement affichée, les deux trames correspondant à des lignes de parités différentes de ladite image.

## FIG.1

FIG.2

# FIG.3

# FIG.4

BMA → MB1 PA1

MB2 PA2

BMB → $MB_{k+1}$ PB1

$MB_{k+2}$ PB2

IMG

# FIG.5

FIG.6

EP 0 967 576 A1

FIG.7

FIG.8

## FIG.9

700 DECODAGE IM1

PTA ← @1
PTB ← @1

701 LECTURE PAQUET SCD

702 DETECTION PSC2

703 LECTURE ET2

IM2 ≡ TYPE B

704 RG1 ← @1

705 RG3 ← TR2

706 RG4 ← TR2

707 1er DECODAGE IM2

708 RG2 ← @2

709 1er DECODAGE IM2 (suite)

FIN 1er DECODAGE IM2

710 RDC

711 RG2 ← @1

PTB ← @1

LECTURE TR2 ?

713 NON PPL INACTIF

714 OUI 2ème DECODAGE IM2

715 RG2 ← @2

716 2ème DECODAGE IM2 (suite)

FIN 2ème DECODAGE IM2

# FIG.10

Office européen
des brevets

**RAPPORT DE RECHERCHE EUROPEENNE**

Numéro de la demande

EP 99 40 1457

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP 0 587 443 A (TEXAS INSTRUMENTS INC) 16 mars 1994 (1994-03-16) * colonne 1, ligne 5 - ligne 12 * * colonne 2, ligne 24 - ligne 40; revendication 1; figures 6,8 * --- | 1,3 | G06T9/00 |
| P,X | EP 0 863 676 A (DISCOVISION ASS) 9 septembre 1998 (1998-09-09) * le document en entier * --- | 1,3 | |
| X | EP 0 716 395 A (PHILIPS ELECTRONIQUE LAB ;PHILIPS ELECTRONICS NV (NL)) 12 juin 1996 (1996-06-12) * le document en entier * --- | 2,4 | |
| A | PATENT ABSTRACTS OF JAPAN vol. 096, no. 009, 30 septembre 1996 (1996-09-30) & JP 08 130713 A (GRAPHICS COMMUN LAB:KK), 21 mai 1996 (1996-05-21) * abrégé * --- | | **DOMAINES TECHNIQUES RECHERCHES (Int.Cl.6)** |
| A | US 4 758 881 A (LASPADA KATHLEEN A) 19 juillet 1988 (1988-07-19) --- | | G06T |
| A | US 5 195 182 A (SASSON STEVEN J) 16 mars 1993 (1993-03-16) ----- | | |

Le présent rapport a été établi pour toutes les revendications

| Lieu de la recherche | Date d'achèvement de la recherche | Examinateur |
|---|---|---|
| LA HAYE | 5 août 1999 | Pierfederici, A |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 40 1457

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

05-08-1999

| Document brevet cité au rapport de recherche | | Date de publication | Membre(s) de la famille de brevet(s) | | | Date de publication |
|---|---|---|---|---|---|---|
| EP 0587443 | A | 16-03-1994 | JP<br>DE<br>US | 6095631<br>69325487<br>5878173 | A<br>D<br>A | 08-04-1994<br>05-08-1999<br>02-03-1999 |
| EP 0863676 | A | 09-09-1998 | AU<br>CA<br>CN<br>JP | 5212998<br>2205129<br>1192106<br>10341444 | A<br>A<br>A<br>A | 03-09-1998<br>26-08-1998<br>02-09-1998<br>22-12-1998 |
| EP 0716395 | A | 12-06-1996 | FR<br>JP<br>US | 2728092<br>8242447<br>5828412 | A<br>A<br>A | 14-06-1996<br>17-09-1996<br>27-10-1998 |
| JP 08130713 | A | 21-05-1996 | AUCUN | | | |
| US 4758881 | A | 19-07-1988 | AUCUN | | | |
| US 5195182 | A | 16-03-1993 | AUCUN | | | |

EPO FORM P0460

Pour tout renseignement concernant cette annexe : voir Journal Officiel de l'Office européen des brevets. No.12/82